# EUROPEAN PATENT SPECIFICATION

(11) **EP 1 594 741 B1**
(45) Date of publication and mention of the grant of the patent: **06.09.2006**
(21) Application number: 04710127.4
(22) Date of filing: 11.02.2004
(51) Int. Cl.: B64F 1/32, B60P 1/38

(54) **LUGGAGE TRUCK**
GEPÄCKLASTER
FOURGON A BAGAGES

(30) Priority: 11.02.2003 NL 1022640
(43) Date of publication of application: 16.11.2005
(73) Proprietor: Technische Universiteit Delft, 2628 BL Delft (NL)
(72) Inventor: OOSTERHUIS, Ekke, Jurjen, NL-2613 TA Delft (NL); LUTTEKES, Evert, NL-1829 HG Oudorp (NL); RIJSENBRIJ, Joannes, Cornelis, NL-2771 NE Boskoop (NL)
(74) Representative: Van Breda, Jacobus
(86) International application number: PCT/NL2004/000099
(87) International publication number: WO 2004/071868

(56) References cited:
- FR-A- 2 716 069
- GB-A- 814 714
- US-A- 3 066 817
- US-A- 3 173 564
- US-A- 5 163 806

## Description

The invention relates to a luggage truck.

From US-A-3,066,817, which constitutes the closest prior art, a luggage truck is known which comprises a truck and a loading space for luggage.

From GB-A-814 714 a van for articles that are comparable to each other, such as parcels of roughly the same dimensions, e.g. foodstuffs, bottles and the like, is known that is embodied with conveyors disposed in the loading space of the van that are also intended for storage.

The storage truck known from US-A-3,066,817 is provided with a conveyor belt disposed in the loading space that joins up with a further conveyor belt going outside the loading space of the luggage truck. Via this latter conveyor belt luggage is taken from the luggage truck into the hold of an aircraft and from the hold of an aircraft into the luggage truck. In addition, the known luggage truck is provided with storage racks for the luggage. The luggage must then be moved manually between the conveyor belt disposed in the loading space and these storage racks. This is hard work; a likely reason why the luggage truck disclosed in US-A-3,066,817 has not found widespread application.

In the modern-day transport systems for flight luggage to or from narrow-body aircraft, luggage carts are used for the transport from and to the terminal. Here also, loading and unloading the carts requires (much) manpower, involving considerable physical strain under all kinds of weather conditions. The required number of personnel makes the luggage transfer a substantial item of expenditure, while the handling of the luggage also forms a critical time element in dealing with planes, especially when transfer luggage has to be taken from a first aircraft to a second aircraft. Moreover, the luggage carts usually used at airports contribute considerably to the traffic congestion existing at and around these airports.

It is an object of the invention to solve one or several of these problems.

In accordance with the invention, there is to this end proposed a luggage truck as specified in one or several of the appended claims.

In a first aspect of the invention, the luggage truck which comprises a loading space for luggage, which is provided with a conveyor belt disposed in the loading space for the supply and removal of luggage, and which conveyor belt is at the same time a storage unit for the luggage, is characterised in that the conveyor belts disposed in the loading space can be repositioned in height and sideways. By this measure a conveyor belt in the loading space can be adjusted to the level of a conveyor belt outside the luggage truck supplying and removing the luggage. This greatly facilitates the circulation of the conveyor belts in the loading space and the sorting of the luggage. Said conveyor belt disposed outside the loading space may actually be part of the luggage truck itself.

Furthermore, it is preferred for the loading space to be provided with several conveyor belts disposed next to and/or above each other. In this way optimal use can be made of the loading space of the luggage truck so as to allow such a luggage truck, embodied in dimension that are acceptable in road transport, to transport a maximum number of luggage items.

It is further advantageous for the loading space to be provided with a drive member that can be selectively coupled with one of the conveyor belts. In this way each of the separate conveyor belts can be driven at low costs, i.e. in the position in which the respective conveyor belt joins up with the external conveyor belt and in which it is in position for loading and unloading the luggage.

It is further desirable that the loading space and the truck can be uncoupled. This allows the truck to be deployed for the transport of another loading space, while in the meantime allowing the uncoupled loading space to be loaded or unloaded.

Finally, it is desirable that space be provided in the loading space, for non-standard items of luggage.

Hereinbelow the invention will be further elucidated by way of a non-limiting exemplary embodiment and with reference to the accompanying drawing.

The drawing shows in:
Figure 1 a luggage truck according to the invention as used for loading and unloading a so-called 'narrow body' aircraft; and
Figure 2 a schematic three-dimensional illustration of a luggage truck as proposed in accordance with the invention.

Identical parts in the figures are identified with the same reference numbers.

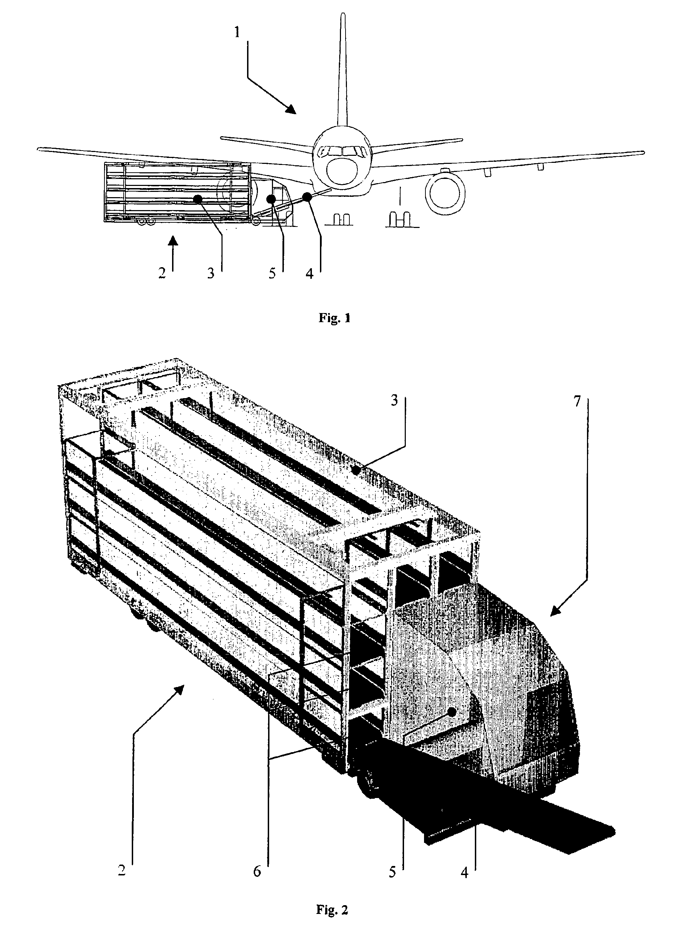

Referring first to Figure 1, reference number 1 denotes a so-called 'narrow body' aircraft, which is characterised in that the access to the loading space is restricted. The luggage that is to be taken to and from the aircraft must therefore preferably be supplied from a point located lower than or at the most at the same height as the threshold of the opening of the loading space.

To this end the luggage truck 2 used in accordance with the invention is provided with a conveyor belt 4 disposed outside the loading space 3 with which the aircraft 1 can be loaded and unloaded, and which slopes in the direction of the aircraft 1. The luggage truck is further provided with a driver's cab 5. After the driver has moved the luggage truck 2 and placed it in the desired position, the driver, after leaving the driver's cab 5, is able to operate the luggage truck 2, allowing personnel that would otherwise be needed for loading and unloading the luggage to be deployed elsewhere.

In order to make this possible, the luggage truck is provided with a loading space 3 in which at least one, but preferably several conveyor belts 6 are provided. In the exemplary embodiment shown, these conveyor belts 6 are disposed next to, as well as above each other. The conveyor belts 6 are always loaded and unloaded when the respective conveyor belt 6 that is disposed inside the loading space 3 joins up with the external conveyor belt 4.

To this end it is possible to bring the external conveyor belt 4 each time to the same level as the conveyor belt disposed in the loading space 3, with which loading and unloading is to be carried out. However, in the context of the invention it is preferred for the external conveyor belt 4 to be fixed, and for the conveyor belt 6 disposed in the loading space 3 and which is to be loaded and unloaded, to each time be brought to a level allowing it to run into the external conveyor belt 4. For this purpose it is desirable that the conveyor belts 6 disposed in the loading space 3 can be repositioned in height and sideways.

It is further desirable that preferably in the loading space 3, at the underside of the lowest possible positioning of the conveyor belts 6, a drive member be provided for driving the conveyor belt 6 which - in that case - is aligned with the external conveyor belt 4. For this purpose it is desirable that said drive member (not shown in the figure), be driven by means of, for example, a friction band that can be coupled with the conveyor belt 6 to be driven.

The adjustment of the height of the individual conveyor belts 6 can be arranged in a manner known to the person skilled in the art. For this purpose it is, for example, practical to employ a lifting mechanism in the loading space 3 that is provided with a table with scissor-action brackets, and wherein the wall of the loading space is provided with a ratchet system that, after a conveyor belt has been lifted to a predetermined height, maintains the conveyor belt at the height reached.

Moving the conveyor belt 6 sideways can also be arranged in a manner known to the person skilled in the art with the aid of guide rails or the like and pressure cylinders or an electric drive.

Finally, it is worth mentioning that the loading space 3 may be used as independent unit by designing it such that it can be uncoupled from the truck 7. After uncoupling, the truck 7 may be deployed for moving another loading space 3.

The luggage truck 2 according to the invention is preferably designed such that it complies with the maximum dimensions allowable for road transport.

## Claims

1. A luggage truck (2) comprising a loading space (3) for luggage and provided with a conveyor belt (4) disposed in the loading space (3) for the supply and removal of luggage, which conveyor belt (4) is at the same time a storage unit for the luggage, **characterised in that** the conveyor belts (4) disposed in the loading space can be repositioned in height and sideways.

2. A luggage truck according to claim 1, **characterised in that** the loading space (3) is provided with several conveyor belts (4) disposed next to and/or above each other.

3. A luggage truck according to claim 1 or 2, **characterised in that** the loading space (3) is provided with a drive member that can be selectively coupled with one of the conveyor belts (4) while the same is in the loading or unloading position.

4. A luggage truck according to one of the claims 1-3, **characterised in that** the loading space (3) and the truck (2) can be uncoupled.

5. A luggage truck according to one of the claims 1-4, **characterised in that** space is provided in the loading space (3), for non-standard items of luggage.

## Patentansprüche

1. Gepäck-Lastkraftwagen (2), der einen Laderaum (3) für Gepäck umfasst und mit einem in dem Laderaum (3) angeordneten Förderband (4) zum Beladen und Entladen von Gepäck ausgestattet ist, wobei das Förderband (4) gleichzeitig eine Lagereinheit für das Gepäck ist, **dadurch gekennzeichnet, dass** die in dem Laderaum angeordneten Förderbänder (4) in der Höhe und seitlich verschoben werden können.

2. Gepäck-Lastkraftwagen nach Anspruch 1, **dadurch gekennzeichnet, dass** der Laderaum (3) mit mehreren Förderbändern (4) ausgestattet ist, die nebeneinander und/oder übereinander angeordnet sind.

3. Gepäck-Lastkraftwagen nach Anspruch 1 oder 2, **dadurch gekennzeichnet, dass** der Laderaum (3) mit einem Steuerelement ausgestattet ist, das selektiv mit einem der Förderbänder (4) verbunden werden kann, während sich dieses in der Lade- oder Entladeposition befindet.

4. Gepäck-Lastkraftwagen nach einem der Ansprüche 1 bis 3, **dadurch gekennzeichnet, dass** der Laderaum (3) und der Lastkraftwagen (2) entkoppelt werden können.

5. Gepäck-Lastkraftwagen nach einem der Ansprüche 1 bis 4, **dadurch gekennzeichnet, dass** in dem Laderaum (3) Platz für nicht normgerechte

## Revendications

1. Fourgon à bagages (2) comprenant un espace de chargement (3) pour les bagages et pourvu d'une courroie transporteuse (4) disposée dans l'espace de chargement (3) pour le dépôt et le retrait des bagages, laquelle courroie transporteuse (4) constitue dans le même temps une unité de stockage pour les bagages, **caractérisé en ce que** les courroies transporteuses (4) disposées dans l'espace de chargement peuvent être repositionnées en hauteur et sur les côtés.

2. Fourgon à bagages selon la revendication 1, **caractérisé en ce que** l'espace de chargement (3) est pourvu de plusieurs courroies transporteuses (4) disposées les unes à côté et/ou au-dessus des autres.

3. Fourgon à bagages selon la revendication 1 ou 2, **caractérisé en ce que** l'espace de chargement (3) est pourvu d'un élément d'entraînement qui peut être couplé, de manière sélective, avec l'une des courroies transporteuses (4) tandis que celle-ci est en position de chargement ou de déchargement.

4. Fourgon à bagages selon l'une des revendications 1 à 3, **caractérisé en ce que** l'espace de chargement (3) et le fourgon (2) peuvent se décrocher.

5. Fourgon à bagages selon l'une des revendications 1 à 4, **caractérisé en ce qu'**un espace est prévu dans l'espace de chargement (3) pour les bagages non standards.
